# EUROPÄISCHE PATENTSCHRIFT

(11) **EP 3 775 628 B1**
(45) Veröffentlichungstag und Bekanntmachung des Hinweises auf die Patenterteilung: **04.05.2022**
(21) Anmeldenummer: 19712536.2
(22) Anmeldetag: 13.03.2019
(51) Int. Cl.: F16H 63/48, B60W 10/18, F16H 61/00

(54) **VERFAHREN ZUR STEUERUNG EINES FAHRZEUGS**
METHOD FOR CONTROLLING A VEHICLE
PROCÉDÉ DE COMMANDE D'UN VÉHICULE

(30) Priorität: 26.03.2018 DE 102018204571
(43) Veröffentlichungstag der Anmeldung: 17.02.2021
(73) Patentinhaber: Magna PT B.V. & Co. KG, 74199 Untergruppenbach (DE)
(72) Erfinder: FAUTZ, Matthias, 77781 Biberach (DE); ROESCH, Dominik, 88410 Bad Wurzach (DE)
(74) Vertreter: Zangger, Bernd
(86) Internationale Anmeldenummer: PCT/EP2019/056314
(87) Internationale Veröffentlichungsnummer: WO 2019/185355

(56) Entgegenhaltungen:
- EP-A2- 1 348 591
- DE-A1-102005 005 669
- DE-A1-102005 023 244
- US-A1- 2017 080 943

## Beschreibung

### Gebiet der Erfindung

Die vorliegende Erfindung betrifft ein Verfahren zur Steuerung eines Fahrzeugs mit einem automatisierten Schaltgetriebe und ein Fahrzeug umfassend eine Steuerungsvorrichtung zur Ausführung eines solchen Verfahrens.

### Stand der Technik

Fahrzeuge mit einem automatisierten Schaltgetriebe, das mehrere automatisiert schaltbare Fahrgänge aufweist, sowie eingangsseitig eine erste Reibungskupplung und ausgangsseitig einen Abtrieb umfasst, sind an sich bekannt. Automatisierte Schaltgetriebe weisen automatisierte Schaltkomponenten auf, so dass ein Gangwechsel am Schaltgetriebe nicht von einem Fahrer selbst durchgeführt werden muss, sondern üblicherweise mit Hilfe eines Steuerprogramms und Komponenten wie elektrischen Stellmotoren oder hydraulisch betätigten Zylindern erfolgt.

Auch bekannt sind automatisierte Schaltgetriebe die als Doppelkupplungsgetriebe ausgebildet sind, die ein erstes Teilgetriebe, mit einer ersten Gruppe von Fahrgängen aufweisenden sowie eingangsseitig mit einer ersten Reibungskupplung verbundenen ersten Eingangswelle, sowie ein zweites Teilgetriebe, mit einer zweiten Gruppe von Fahrgängen, sowie eingangsseitig mit einer zweiten Reibungskupplung verbundenen zweiten Eingangswelle, und einen gemeinsamen Abtrieb umfassen. Derartige Doppelkupplungsgetriebe erlauben auf Grund der verwendeten beiden Teilgetriebe einen Gangwechsel ohne Zugkraftunterbrechung. Die Übertragung des Antriebsmoments erfolgt über eine von zwei Kupplungen, welche die zwei Teilgetriebe mit dem Antrieb verbinden. Ein Gangwechsel ohne Zugkraftunterbrechung kann erfolgen, indem gleichzeitig eine Kupplung schließt, während die andere Kupplung öffnet und umgekehrt.

Parksperrmechanismen sind dazu ausgebildet, ein Fahrzeug bewegungsunfähig zu machen, wenn das Fahrzeug geparkt und nicht in Gebrauch ist. Bekannte Parksperrmechanismen weisen typischerweise einen Klauenring auf, der mit einer drehbaren Komponente des Antriebsstrangs zur gemeinsamen Drehung gekoppelt ist, und eine Klinke, die selektiv mit dem Klauenring in Eingriff gebracht werden kann um eine Drehung zu blockieren.

Zur Verwirklichung einer Parksperre bei Doppelkupplungsgetrieben wurde vorgeschlagen, von konventionellen Automatikgetrieben bekannte Ansätze zu adaptieren, die auf einem gesonderten, formschlüssig wirkenden Sperrelement basieren, das üblicherweise die Form eines auf der Getriebeabtriebswelle drehfest angeordneten, mit Aussparungen oder Zähnen versehenen Rades aufweist, die schaltbar mit einem oder mehreren Sperrklinken oder einer feststehenden Gegenverzahnung in Wirkverbindung gebracht werden können. Dies erfordert einen erheblichen zusätzlichen Herstellungsaufwand und bedeutet zudem eine Erhöhung des Gewichts und des Bauvolumens des Doppelkupplungsgetriebes.

Aus der DE 199 50 696 A1 ist bereits eine Parksperre für ein Doppelkupplungsgetriebe bekannt, welche die besonderen baulichen Eigenschaften des Doppelkupplungsgetriebes zur Verwirklichung einer wirksamen Parksperre nutzt. Mindestens einer der Getriebeeingangswellen sind mehrere Gänge zugeordnet, von denen in einer Parksperrenfunktion zwei Gänge gleichzeitig schaltbar sind. Bei eingelegter Parksperre ist die Getriebeabtriebswelle über die Gangräder der beiden eingelegten Gänge und die betreffende Getriebeeingangswelle formschlüssig blockiert und damit das betreffende Kraftfahrzeug gegen ein Wegrollen gesichert.

Aus der DE10 2007 019241 A1 ist ein Doppelkupplungsgetriebe mit einem Parksperrmechanismus bekannt, wobei zur Aktivierung der Parksperre ein Anfahrgang und einer der Fahrgänge desselben Teilgetriebes gleichzeitig eingelegt werden.

Die DE 10 2005 023244 A1 offenbart ein Verfahren zur Steuerung der Betätigung einer Parksperre eines automatisierten Schaltgetriebes für ein Kraftfahrzeug, wobei das Schaltgetriebe über Schaltmittel verfügt, mit denen zur Realisierung einer Parksperre wenigstens zwei Getriebegänge im Wesentlichen gleichzeitig einlegbar sind, und bei dem beim Einlegen dieser Getriebegänge das Fahrzeug zumindest annähernd stillsteht, wobei nach dem Erkennen des Fahrerwunsches zum Einschalten der Parksperre und vor dem Einlegen der wenigstens zwei Getriebegänge die Geschwindigkeit des Fahrzeugs durch wenigstens ein aktuatorbetätigbares Bremsmittel automatisch soweit reduziert wird, dass die Parksperre durch Einlegen der wenigstens zwei Getriebegänge schnell und komfortabel eingeschaltet werden kann.

Aus der EP 1 348 591 A2 ist ein Kraftfahrzeuggetriebe zum stufenweisen Ändern der Geschwindigkeit einer Antriebskraft eines Leistungssystems zur Übertragung auf Antriebsräder bekannt, umfassend: ein Eingangselement, das mit dem Leistungssystem verbunden ist, ein Ausgangselement, das mit den Antriebsrädern verbunden ist, eine Mehrzahl von Zahnradpaaren mit unterschiedlichen Übersetzungsverhältnissen, die parallel zwischen dem Eingangselement und dem Ausgangselement vorgesehen sind, eine Vielzahl von mechanischen Kupplungsmechanismen zum Verbinden des Eingangselements mit dem Ausgangselement über ein beliebiges Paar der Vielzahl von Zahnradpaaren; Steuermittel, um mindestens zwei der mehreren mechanischen Kupplungsmechanismen in die Lage zu versetzen, unabhängig zu arbeiten; und eine Bereichsauswahleinrichtung zum Durchführen eines Schaltvorgangs, um einen Bereich aus einer Vielzahl von Bereichen auszuwählen, die einen Fahrbereich und einen Parkbereich umfassen, wobei, wenn die Bereichsauswahleinrichtung betätigt wird, um aus irgendeinem anderen der mehreren Bereiche in den Parkbereich zu schalten, die Steuereinrichtung die mehreren mechanischen Kupplungsmechanismen so steuert, dass das Eingangselement und das Ausgangselement über Paare der mehreren Paare von Zahnrädern, die mindestens zwei Übersetzungsverhältnissen entsprechen, miteinander verbunden sind.

### Zusammenfassung der Erfindung

Es ist eine Aufgabe der Erfindung, ein Verfahren zur Steuerung eines Fahrzeugs anzugeben, das eine effiziente und dennoch einfache Parksperrfunktion darstellen kann und ein Fahrzeug anzugeben, dass zur Ausführung einer solchen effiziente Parksperrfunktion ausgebildet ist.

Die Lösung der Aufgabe erfolgt durch ein Verfahren zur Steuerung eines Fahrzeugs mit einem automatisierten Schaltgetriebe, das mehrere automatisiert schaltbare Fahrgänge aufweist, sowie eingangsseitig eine erste Reibungskupplung und ausgangsseitig einen Abtrieb umfasst, wobei in einer Parksperrfunktion zwei Gänge gleichzeitig eingelegt sind, nämlich ein erster Gang und ein zweiter Gang, wobei auf eine Anforderung des Aktivierens der Parksperrfunktion hin, zumindest in einem ersten Geschwindigkeitsbereich des Fahrzeugs, eine Fahrzeugbremse aktiviert wird um das Fahrzeug zum Stillstand zu bringen, wobei während dem Bremsen des Fahrzeugs mittels Fahrzeugbremse der erste Gang eingelegt wird und bei oder nahezu bei Stillstand des Fahrzeugs der zweite Gang eingelegt wird, so dass die Parksperrfunktion aktiviert ist, wobei nach, während oder kurz vor dem Einlegen des ersten Ganges das Bremsen durch die Fahrzeugbremse verstärkt wird.

Erfindungsgemäß wird also ein Fahrzeug bei Anforderung der Parksperrfunktion, insbesondere wenn dieses noch nicht steht sondern sich in einem festgelegten ersten Geschwindigkeitsbereich befindet, mittels einer üblichen Fahrzeugbremse abgebremst und bereits während dieses Abbremsvorgangs der erste der zur Blockierung benötigten zwei Gänge eingelegt. Nicht zur Erfindung gehört, dass falls der erste benötigte Gang bereits vor der Anforderung der Parksperrfunktion eingelegt war, ein Einlegen des ersten Gangs zu diesem Zeitpunkt nicht erfolgen muss, sodass dieser erste Gang eingelegt bleibt. Ist während des Abbremsvorgangs ein Gang eingelegt, der nicht dem ersten der zur Blockierung benötigten zwei Gänge entspricht, so wird erfindungsgemäß dieser umgehend ausgelegt, wobei anschließend der erste der zur Blockierung benötigten Gänge eingelegt wird.

Auf diese Weise kann sofort wenn das Fahrzeug stillsteht, oder auch sehr knapp davor, unmittelbar der zweite erforderliche Gang eingelegt werden, um den Antrieb des Fahrzeugs zu blockieren und somit die Parksperrfunktion zu aktivieren.

Die für das Einlegen des ersten benötigten Gangs erforderliche Zeitdauer fällt daher großteils oder bevorzugt vollständig bereits in die Zeitdauer des Bremsvorgangs des Fahrzeuges. Das abschließende Blockieren durch Einlegen des zweiten erforderlichen Gangs ist somit rascher abgeschlossen als bisher üblich, das Aktivieren der Parksperrfunktion erfolgt daher besonders effizient und nutzt zudem die ohnehin durch das Schaltgetriebe vorgegebenen Komponenten. Weiterhin sind während des Abbremsvorgangs die beim Einlegevorgang beteiligten Komponenten, insbesondere die in synchron zu bringende Getriebeeingangs- und ausgangswelle in einer gleichen oder relativ zueinander drehenden Drehbewegung, womit eine Zahn-auf-Zahn Position der Synchronkupplungen bestmöglich vermieden wird und somit der einzulegende Gang auch schnellstmöglich eingelegt werden kann.

Erfindungsgemäß wird nach, während oder kurz vor dem Einlegen des ersten Ganges das Bremsen durch die Fahrzeugbremse verstärkt, sodass das Fahrzeug schnellstmöglich zum Stillstand kommt. Die Bremskraft der Fahrzeugbremse kann während des Bremsens gleichmäßig oder parabelförmig verstärkt werden, um dem Fahrer ein möglichst komfortables, jedoch sicheres Abbremsen bei einer Geschwindigkeit über 0 km / h zu ermöglichen.

Weiterbildungen der Erfindung sind in den abhängigen Ansprüchen, der Beschreibung sowie den beigefügten Zeichnungen angegeben.

Bevorzugt wird die erste Reibkupplung umgehend geöffnet, wenn die Anforderung der Parksperrfunktion vorliegt. Vorzugsweise wird darüber hinaus eine mit der Reibkupplung gekoppelte Verbrennungskraftmaschine zumindest im Leerlaufbetrieb gehalten, also nicht abgeschaltet, sodass mit der Verbrennungskraftmaschine gekoppelte Aggregate weiterhin angetrieben werden können, auch wenn das Fahrzeug zum Stillstand gebracht wurde. Hierdurch kann gewährleistet werden, dass ein mit dem Aggregat wirkverbundener Aktuator die zur Blockierung benötigten zwei Gänge mit voller Leistung schnellstmöglich einlegen kann.

Das automatisierte Schaltgetriebe kann vorzugsweise ein Doppelkupplungsgetriebe sein, das ein erstes Teilgetriebe mit einer ersten Gruppe von Fahrgängen aufweisenden sowie eingangsseitig mit der ersten Reibungskupplung verbundenen ersten Eingangswelle, ein zweites Teilgetriebe mit einer zweiten Gruppe von Fahrgängen aufweisenden sowie eingangsseitig mit einer zweiten Reibungskupplung verbundenen zweiten Eingangswelle, und einen gemeinsamen Abtrieb umfasst. In einer Parksperrfunktion können dann zwei, einem der beiden Teilgetriebe zugeordnete Gänge gleichzeitig eingelegt sein, nämlich ein erster Gang und ein zweiter Gang des betreffenden Teilgetriebes. Erfindungsgemäß kann dann auf eine Anforderung des Aktivierens der Parksperrfunktion hin, zumindest in einem ersten Geschwindigkeitsbereich des Fahrzeugs, eine Fahrzeugbremse aktiviert werden um das Fahrzeug zum Stillstand zu bringen, wobei während dem Bremsen des Fahrzeugs mittels Fahrzeugbremse der erste Gang des betreffenden Teilgetriebes eingelegt wird und bei oder nahezu bei Stillstand des Fahrzeugs der zweite Gang des betreffenden Teilgetriebes eingelegt wird, so dass die Parksperrfunktion aktiviert ist. Insbesondere kann im nicht betroffenen Teilgetriebe während des Abbremsvorgangs ein Gang, insbesondere ein Anfahrgang (1., 2. oder R.-Gang) eingelegt werden oder eingelegt bleiben, der bei einem Wiederanfahrvorgang genutzt wird, um das verspannte automatisierte Schaltgetriebe zu entlasten. Ist das automatisierte Getriebe ausreichend entspannt, kann zumindest ein Gang der zur Blockierung benötigten Gänge wieder ausgelegt werden. Das zusätzliche Einlegen des Gangs im nicht betroffenen Teilgetriebe während des Abbremsvorgangs ist eine Maßnahme zur Überwindung einer Zahn-auf-Zahn Position, so dass der Gang auch tatsächlich eingelegt werden kann.

Bevorzugt wird die Reibkupplung im betroffenen, als auch die Reibkupplung im nicht betroffenen Teilgetriebe umgehend geöffnet, wenn eine Anforderung der Parksperrfunktion vorliegt.

Zudem kann bei einer Anforderung des Aktivierens der Parksperrfunktion mittels einer elektrischen Maschine rekuperiert werden, die an das automatisierte Schaltgetriebe angebunden ist, um das Fahrzeug beim Abbremsen zum Stillstand hin zu unterstützen. Die elektrische Maschine kann dabei an eines der beiden Teilgetriebe drehverbunden sein. Bevorzugt ist die elektrische Maschine mit dem nicht betroffenen Teilgetriebe drehverbunden, sodass ein reibungsloses Einlegen der zur Blockierung benötigten zwei Gänge im betroffenen Teilgetriebe gewährleistet werden kann.

Die Fahrzeugbremse kann insbesondere eine übliche Betriebsbremse des Fahrzeuges sein, die zum Verzögern und Anhalten des Fahrzeugs benutzt wird.

Der erforderliche erste Gang, der während des Bremsvorgangs eingelegt wird, kann insbesondere der 1. Gang des Getriebes sein, also die erste Schaltstufe, und somit bereits ein üblicher Gang für das spätere erneute Anfahren des Fahrzeuges.

Der erforderliche erste Gang, der während des Bremsvorgangs eingelegt wird, kann ferner eine Rückwärtsgangstufe sein und somit bereits ein üblicher Gang für das spätere erneute Anfahren des Fahrzeuges.

Der zweite Gang kann dann insbesondere jede ungerade Gangstufe sein, bevorzugt die höchste Gangstufe oder in einem Doppelkupplungsgetriebe die höchstmögliche Gangstufe desselben Teilgetriebes, beispielsweise der 5 Gang.

Vorzugsweise wird, sobald die Fahrzeugbremse aktiviert wird um das Fahrzeug zum Stillstand zu bringen, der erste Gang eingelegt, so dass das Einlegen des ersten erforderlichen Gangs ohne Zeitverzögerung so schnell wie möglich erfolgt.

Bevorzugt reicht der erste Geschwindigkeitsbereich des Fahrzeugs bis etwa 5 km/h und besonders bevorzugt beginnt dieser Geschwindigkeitsbereich knapp über 0 km/h. Über dem Geschwindigkeitsbereich, also insbesondere wenn das Fahrzeug sich schneller als mit 5 km/h bewegt, kann die Anforderung des Aktivierens der Parksperrfunktion abgelehnt werden. Unterhalb des Geschwindigkeitsbereich, also insbesondere wenn das Fahrzeug bereits steht, ist ein Bremsvorgang nicht erforderlich.

Nach dem Einlegen des ersten Ganges und bei oder nahezu bei Stillstand des Fahrzeugs, insbesondere bevor, während oder nach dem der zweite Gang eingelegt wird, wird bevorzugt eine Feststellbremse des Fahrzeugs aktiviert.

Die Feststellbremse kann während eines Stillstands des Fahrzeuges aktiviert bleiben und erst beim Deaktivieren der Parksperrfunktion wieder gelöst werden, insbesondere nach dem Auslegen des zweiten, blockierenden Gangs, damit sich das Getriebe während des Stillstands des Fahrzeugs nicht verspannt, insbesondere durch das Fahrzeuggewicht falls das Fahrzeug in einer Steigung abgestellt ist. Wenn das Fahrzeug in einem ebenen Bereich abgestellt ist, was beispielsweise mittels Sensoren festgestellt werden kann, kann die Feststellbremse auch gleich wieder gelöst werden.

Bevorzugt werden, falls dies erforderlich ist, zum Einlegen des zweiten Gangs geeignete Maßnahmen zur Überwindung einer Zahn-auf-Zahn Position durchgeführt, so dass der zweite Gang auch tatsächlich eingelegt werden kann. Insbesondere kann dies durch Vorspannen einer Schaltgabel beispielsweise mittels Federkraft erfolgen, solange bis der erforderliche zweite Gang tatsächlich eingelegt ist.

Auf eine Anforderung des Deaktivierens der Parksperrfunktion hin, wird bevorzugt der zweite eingelegte Gang ausgelegt und danach gegebenenfalls auch eine Feststellbremse gelöst.

Vorzugsweise wird vor dem Lösen des zweiten eingelegten Ganges die hierfür erforderliche Schaltkraft bestimmt und werden, falls die erforderliche Schaltkraft einen Grenzwert überschreitet, Hilfsmaßnahmen zum leichteren Lösen des zweiten Ganges durchgeführt. Die Hilfsmaßnahmen können insbesondere darin bestehen, dass mittels der ersten oder zweiten Reibungskupplung ein Drehmoment auf das betroffene Teilgetriebe aufgebracht wird, um verspannte Zahnräder wieder zu lösen.

Vorzugsweise werden die zur Blockierung benötigten zwei Gänge mittels einer Schaltwalzenaktuatorik sequenziell eingelegt.

Ein Fahrzeug kann erfindungsgemäß ein automatisiertes Schaltgetriebe, insbesondere ein Doppelkupplungsgetriebe umfassen und eine Steuerungsvorrichtung, wobei die Steuerungsvorrichtung dazu ausgebildet ist ein Verfahren wie oben beschrieben auszuführen.

### Kurzbeschreibung der Zeichnungen

Die Erfindung wird im Folgenden beispielhaft unter Bezugnahme auf die Zeichnungen beschrieben.
- Fig. 1: ist eine schematische Darstellung der Wirkung eines erfindungsgemäßen Verfahrens mittels zweier Zeitstrahlen.
- Fig. 2: ist eine Darstellung eines erfindungsgemäßen Verfahrens bei einer Anforderung des Aktivierens der Parksperrfunktion.
- Fig. 3: ist eine Darstellung eines erfindungsgemäßen Verfahrens bei einer Anforderung des Deaktivierens der Parksperrfunktion.

### Detaillierte Beschreibung der Erfindung

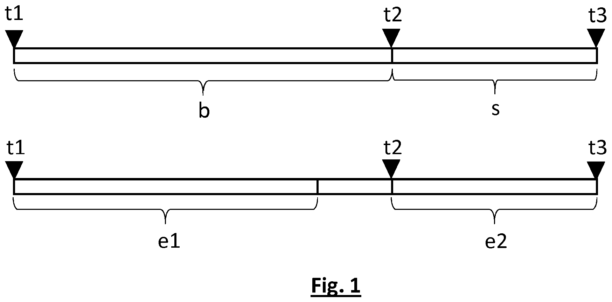

In Fig. 1 ist schematisch die Wirkung eines erfindungsgemäßen Verfahrens mittels zweier Zeitstrahlen dargestellt.

Dabei betrifft die obere Darstellung der Fig. 1 den selben Vorgang und den selben Zeitabschnitt wie die unten, in Fig. 1, gezeigte Darstellung.

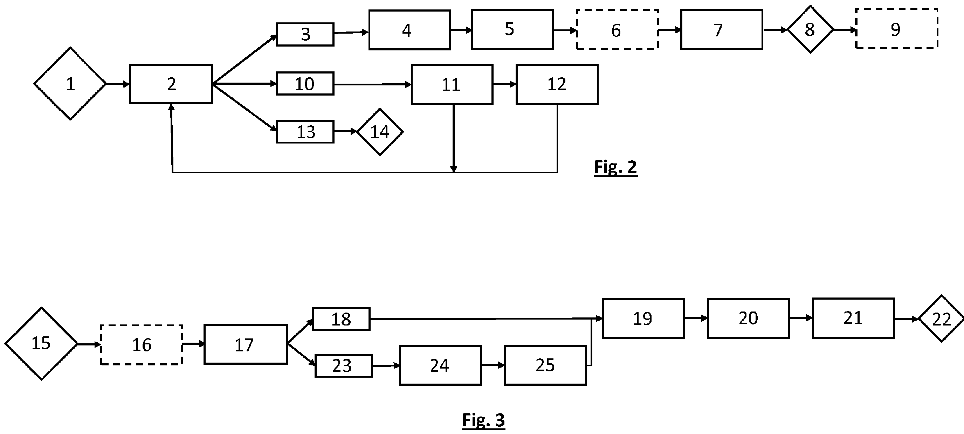

t1 stellt den Zeitpunkt einer Anforderung des Aktivierens der Parksperrfunktion dar (entsprechend Bezugszeichen 1 in Fig. 2). Ein Fahrzeug das mit einer erfindungsgemäßen Steuerung ausgestattet ist, hat dabei eine geringe Geschwindigkeit von zum Beispiel 3 km/h.

Wie in der oberen Darstellung der Fig. 1 zu sehen, erfolgt auf die Anforderung zum Zeitpunkt t1 hin, möglichst unverzüglich, ein Abbremsen b des

Fahrzeugs mittels einer Fahrzeugbremse, insbesondere der Betriebsbremse des Fahrzeugs, bis zum Zeitpunkt t2, an dem das Fahrzeug Still steht oder nahezu still steht. In der folgenden Stillstandszeit s soll möglichst schnell das Aktivieren der Parksperrfunktion durchgeführt bzw. abgeschlossen werden, so dass zum Zeitpunkt t3 die Aktivierung der Parksperrfunktion bestätigt werden kann.

Aus diesem Grund wird erfindungsgemäß, wie in der unteren Darstellung der Fig. 1 zu sehen, während des Bremsens des Fahrzeuges b, also zwischen den Zeitpunkten t1 (Anforderung Parksperrfunktion) und t2 (Stillstand des Fahrzeugs), der erste Gang der erforderlichen beiden Gänge zum Blockieren des Getriebes eingelegt e1.

Nach dem Zeitpunkt t2 (Stillstand des Fahrzeugs) muss daher nur noch der zweite erforderliche Gang eingelegt werden e2, woraufhin das Schaltgetriebe oder das hierzu genutzte Teilgetriebe des Doppelkupplungsgetriebes des Fahrzeugs blockiert ist und somit die Parksperrfunktion zum Zeitpunkt t3 aktiviert ist.

Mögliche Schritte eines erfindungsgemäßen Verfahrens zur Steuerung eines Fahrzeugs mit einem automatisierten Schaltgetriebe, insbesondere Doppelkupplungsgetriebe, sind in Fig. 2 dargestellt.

Dabei zeigen in Fig. 2 - wie auch in Fig. 3- gestrichelt dargestellte Kästchen optionale Maßnahmen die nur in Sondersituationen erforderlich sind, wobei jedoch auch die durchgehend gezeichneten Verfahrensschritte nicht in allen Ausführungsformen des Verfahrens durchgeführt werden müssen.

Auf eine Anforderung des Aktivierens der Parksperrfunktion 1 hin, wird zunächst die aktuelle Fahrzeuggeschwindigkeit geprüft 2. Wenn die aktuelle Geschwindigkeit größer als die Obergrenze des festgelegten ersten Geschwindigkeitsbereichs ist 13, also größer einem Grenzwert, z.B. größer als 5 km/h, wird die Anforderung der Parksperrfunktion nicht erfüllt sondern abgelehnt 14.

Liegt die aktuelle Fahrzeuggeschwindigkeit im vordefinierten ersten Geschwindigkeitsbereich 10, beispielsweise von knapp über 0 km/h bis zu maximal 5 km/h, wird erfindungsgemäß zunächst ein Bremsvorgang angefordert 11, um die Fahrzeugbremse zu aktivieren und das Fahrzeug zum Stillstand zu bringen. Daraufhin wird bereits während des Bremsvorgangs der erste erforderliche Gang eingelegt 12, beispielsweise der erste erforderliche Gang des betreffenden Teilgetriebes eines Doppelkupplungsgetriebes, bevorzugt ein Anfahrtsgang also die erste Gangstufe oder die Rückwärtsgangstufe. Falls der erste erforderliche Gang zu diesem Zeitpunkt bereits eingelegt war, kann der erste Gang eingelegt bleiben.

Während des Bremsvorgangs wird weiterhin die Fahrzeuggeschwindigkeit geprüft 2 und weiter gebremst bis das Fahrzeug Still steht oder nahezu still steht 3, woraufhin das Verfahren im entsprechenden Zweig fortgeführt wird. Ein erneutes Einlegen des ersten erforderlichen Gangs 12 muss natürlich nicht erfolgen, wenn dies bereits zuvor geschehen ist.

Bei Stillstand des Fahrzeugs 3, also einer Geschwindigkeit von zumindest annähernd 0 km/h, wird zunächst eine Feststellbremse des Fahrzeugs aktiviert 4, insbesondere eine elektrische Feststellbremse, und daraufhin beispielsweise eine Schaltwalze des Getriebes bewegt und in eine Schaltposition gebracht 5, um den zweiten Gang einzulegen. Falls dabei eine Zahn-auf-Zahn Stellung, beispielsweise eines Schaltrades mit einem Losrad, festgestellt wird, können geeignete Maßnahmen zur Überwindung der Zahn-auf-Zahn Position getroffen werden 6, insbesondere kann eine Schaltgabel vorgespannt werden um gegen das Schaltrad zu drücken.

Schließlich erfolgt das Einlegen des zweiten Gangs 7, so dass das Teilgetriebe blockiert wird. Die erfolgreiche Aktivierung der Parksperrfunktion kann nun bestätigt werden 8. Gegebenenfalls kann der Mechanismus zur Überwindung der Zahn-auf-Zahn Position wieder gelöst werden 9, insbesondere die Federvorspannung der Schaltgabel gelöst werden.

In Fig. 3 ist ein Verfahrensablauf bei Anforderung des Deaktivierens der Parksperrfunktion 15 dargestellt. Es kann zunächst, optional, die Steigung des Untergrunds des Fahrzeugs ermittelt werden 16, insbesondere um diesen Wert in einer Berechnung der erforderlichen Schaltkraft 17 für das Lösen des zweiten, blockierenden, Gangs zu berücksichtigen.

Falls diese erforderliche Schaltkraft einen vordefinierten Grenzwert überschreitet 23, können Hilfsmaßnahmen zum leichteren Lösen des zweiten Ganges vorgenommen werden 24, 25. Insbesondere kann eine Anforderung einer Kupplungsunterstützung 24 an die Kupplung, oder die betreffende Kupplung des Teilgetriebes, geschickt werden und mittels dieser Kupplung ein gewünschtes Drehmoment auf die Eingangswelle aufgebracht werden 25, um die Verspannung der Zahnräder zu lösen.

Daraufhin kann, wie auch in dem Fall dass die erforderliche Schaltkraft von vorneherein geringer als der definierte Grenzwert ist 18, die Schaltwalze bewegt werden 19, so dass der zweite Gang ausgelegt wird 20. Schließlich kann die Feststellbremse des Fahrzeugs gegebenenfalls gelöst werden 21 und das Deaktivieren der Parksperrfunktion bestätigt werden 22.

Die Erfindung gibt somit in einem Fahrzeug mit einem automatisierten Schaltgetriebe eine Steuerung des Fahrzeugs an, die effizient und auf einfache Weise eine Parksperrfunktion aktivieren und auch deaktivieren kann.

### Bezugszeichenliste

- 1: Anforderung des Aktivierens der Parksperrfunktion
- 2: Ermittlung aktuelle Fahrzeuggeschwindigkeit
- 3: Stillstand des Fahrzeugs (v ca. 0 km/h)
- 4: Feststellbremse des Fahrzeugs aktivieren
- 5: Schaltwalze in Schaltposition bringen
- 6: Maßnahmen zur Überwindung einer Zahn-auf-Zahn Position
- 7: Einlegen des zweiten Gangs
- 8: Bestätigung der Parksperrfunktion
- 9: Lösen der Maßnahmen zur Überwindung Zahn-auf-Zahn Position
- 10: erster Geschwindigkeitsbereich (v < 5 km/h)
- 11: Fahrzeugbremse aktivieren
- 12: Einlegen des ersten Gangs
- 13: Geschwindigkeit höher als erster Geschwindigkeitsbereich (v > 5 km/h)
- 14: Ablehnung der Anforderung Parksperrfunktion
- 15: Anforderung des Deaktivierens der Parksperrfunktion
- 16: Ermitteln der Steigung
- 17: Bestimmen der erforderlichen Schaltkraft
- 18: erforderliche Schaltkraft geringer als Grenzwert
- 19: Bewegen der Schaltwalze
- 20: Auslegen des zweiten Gangs
- 21: Lösen der Feststellbremse
- 22: Bestätigung des Deaktivierens der Parksperrfunktion
- 23: erforderliche Schaltkraft überschreitet Grenzwert
- 24: Hilfsmaßnahmen zum leichteren Lösen des zweiten Ganges - Anforderung Kupplungsunterstützung
- 25: Hilfsmaßnahmen zum leichteren Lösen des zweiten Ganges - Aufbringen eines Drehmoments

- t1: Anforderung Parksperrfunktion
- t2: Stillstand des Fahrzeugs
- t3: Parksperrfunktion aktiviert
- b: Bremsen des Fahrzeugs
- s: Stillstand des Fahrzeugs
- e1: Einlegen des ersten erforderlichen Gangs
- e2: Einlegen des zweiten erforderlichen Gangs

## Patentansprüche

1. Verfahren zur Steuerung eines Fahrzeugs mit einem automatisierten Schaltgetriebe, das mehrere automatisiert schaltbare Fahrgänge aufweist, sowie eingangsseitig eine erste Reibungskupplung und ausgangsseitig einen Abtrieb umfasst, wobei in einer Parksperrfunktion zwei Gänge gleichzeitig eingelegt sind, nämlich ein erster Gang und ein zweiter Gang,
wobei auf eine Anforderung des Aktivierens der Parksperrfunktion (1) hin, zumindest in einem ersten Geschwindigkeitsbereich (10) des Fahrzeugs, eine Fahrzeugbremse aktiviert wird (11) um das Fahrzeug zum Stillstand (3) zu bringen, wobei während dem Bremsen des Fahrzeugs mittels Fahrzeugbremse der erste Gang eingelegt wird (12) und bei oder nahezu bei Stillstand des Fahrzeugs (3) der zweite Gang eingelegt wird (7), so dass die Parksperrfunktion aktiviert ist, **dadurch gekenn** - **zeichnet**, dass nach, während oder kurz vor dem Einlegen des ersten Ganges das Bremsen durch die Fahrzeugbremse verstärkt wird.

2. Verfahren nach Anspruch 1,
**dadurch gekennzeichnet, dass** sobald die Fahrzeugbremse aktiviert wird (11) um das Fahrzeug zum Stillstand zu bringen, der erste Gang eingelegt wird (12).

3. Verfahren nach zumindest einem der vorhergehenden Ansprüche,
**dadurch gekennzeichnet, dass** der erste Geschwindigkeitsbereich des Fahrzeugs (10) bis etwa 5 km/h reicht und bevorzugt knapp über 0 km/h beginnt.

4. Verfahren nach zumindest einem der vorhergehenden Ansprüche,
**dadurch gekennzeichnet , dass** nach dem Einlegen des ersten Ganges und bei oder nahezu bei Stillstand des Fahrzeugs (3), insbesondere bevor, während oder nach dem der zweite Gang eingelegt wird (7), eine Feststellbremse des Fahrzeugs aktiviert wird (4).

5. Verfahren nach Anspruch 4,
**dadurch gekennzeichnet , dass** die Feststellbremse während eines Stillstands des Fahrzeuges aktiviert bleibt und erst beim Deaktivieren der Parksperrfunktion (15) wieder gelöst wird (21).

6. Verfahren nach zumindest einem der vorhergehenden Ansprüche,
**dadurch gekennzeichnet , dass** zum Einlegen des zweiten Gangs erforderlichenfalls Maßnahmen zur Überwindung einer Zahn-auf-Zahn Position durchgeführt werden (6), insbesondere das Vorspannen einer Schaltgabel.

7. Verfahren nach zumindest einem der vorhergehenden Ansprüche,
**dadurch gekennzeichnet , dass** auf eine Anforderung des Deaktivierens der Parksperrfunktion hin (15), der zweite eingelegte Gang ausgelegt wird (20) und danach gegebenenfalls eine Feststellbremse gelöst wird (21).

8. Verfahren nach Anspruch 7,
**dadurch gekennzeichnet , dass** vor dem Auslegen des zweiten eingelegten Ganges (20) die hierfür erforderliche Schaltkraft bestimmt wird (17) und wenn die erforderliche Schaltkraft einen Grenzwert überschreitet (23), Hilfsmaßnahmen zum leichteren Lösen des zweiten Ganges (24, 25) durchgeführt werden.

9. Verfahren nach Anspruch 8,
**dadurch gekennzeichnet, dass** die Hilfsmaßnahmen (24, 25) das Aufbringen eines Drehmoments (25) mittels der ersten oder zweiten Reibungskupplung umfassen.

10. Verfahren nach zumindest einem der vorhergehenden Ansprüche,
**dadurch gekennzeichnet, dass** das automatisierte Schaltgetriebe ein Doppelkupplungsgetriebe ist, das ein erstes Teilgetriebe mit einer ersten Gruppe von Fahrgängen aufweisenden sowie eingangsseitig mit der ersten Reibungskupplung verbundenen ersten Eingangswelle, ein zweites Teilgetriebe mit einer zweiten Gruppe von Fahrgängen aufweisenden sowie eingangsseitig mit einer zweiten Reibungskupplung verbundenen zweiten Eingangswelle, und einen gemeinsamen Abtrieb umfasst, wobei in einer Parksperrfunktion zwei, einem der beiden Teilgetriebe zugeordnete Gänge gleichzeitig eingelegt sind, nämlich ein erster Gang und ein zweiter Gang des betreffenden Teilgetriebes.

11. Fahrzeug umfassend ein automatisiertes Schaltgetriebe, insbesondere ein Doppelkupplungsgetriebe, und eine Steuerungsvorrichtung, wobei die Steuerungsvorrichtung dazu ausgebildet ist ein Verfahren nach zumindest einem der vorhergehenden Ansprüche auszuführen.

## Claims

1. Method for controlling a vehicle having an automated shift transmission which has a plurality of driving gears which are shiftable in an automated manner and which, on the input side, comprises a first friction clutch and, on the output side, an output, wherein, in a parking lock function, two gears are engaged simultaneously, namely a first gear and a second gear,
wherein, upon a request for activation of the parking lock function (1), a vehicle brake is activated (11), at least in a first speed range (10) of the vehicle, in order to bring the vehicle to a standstill (3), wherein, during the braking of the vehicle by means of the vehicle brake, the first gear is engaged (12) and, when the vehicle (3) is at or virtually at a standstill, the second gear is engaged (7), such that the parking lock function is activated, **characterized in that**, after, during or shortly before the engagement of the first gear, the braking by the vehicle brake is boosted.

2. Method according to Claim 1,
**characterized in that**, as soon as the vehicle brake is activated (11) in order to bring the vehicle to a standstill, the first gear is engaged (12).

3. Method according to at least one of the preceding claims,
**characterized in that** the first speed range of the vehicle (10) reaches up to approximately 5 km/h and preferably begins just over 0 km/h.

4. Method according to at least one of the preceding claims,
**characterized in that**, after the first gear is engaged and when the vehicle (3) is at or virtually at a standstill, in particular before, during or after the second gear is engaged (7), a parking brake of the vehicle is activated (4).

5. Method according to Claim 4,
**characterized in that** the parking brake remains activated while the vehicle is at a standstill and is only released again (21) when the parking lock function (15) is deactivated.

6. Method according to at least one of the preceding claims,
**characterized in that**, for the engagement of the second gear, measures for overcoming a tooth-on-tooth position are carried out (6) if necessary, in particular the prestressing of a shift fork.

7. Method according to at least one of the preceding claims,
**characterized in that**, upon a request for deactivation of the parking lock function (15), the second engaged gear is disengaged (20) and then optionally a parking brake is released (21).

8. Method according to Claim 7,
**characterized in that**, before the second engaged gear (20) is disengaged, the shifting force required for this purpose is determined (17) and, if the required shifting force exceeds (23) a limit value, auxiliary measures for easier release of the second gear (24, 25) are carried out.

9. Method according to Claim 8,
**characterized in that** the auxiliary measures (24, 25) comprise the application of a torque (25) by means of the first or second friction clutch.

10. Method according to at least one of the preceding claims,
**characterized in that** the automated shift transmission is a dual clutch transmission which comprises a first transmission section with a first input shaft which has a first group of driving gears and is connected on the input side to the first friction clutch, a second transmission section with a second input shaft which has a second group of driving gears and is connected on the input side to a second friction clutch, and a common output, wherein, in a parking lock function, two gears assigned to one of the two transmission sections are engaged simultaneously, namely a first gear and a second gear of the relevant transmission section.

11. Vehicle comprising an automated shift transmission, in particular a dual clutch transmission, and a control device, wherein the control device is configured to carry out a method according to at least one of the preceding claims.

## Revendications

1. Procédé de commande d'un véhicule comprenant une boîte de vitesses automatisée qui présente plusieurs vitesses pouvant être sélectionnées de manière automatisée, ainsi que côté entrée un premier embrayage à friction et côté sortie un entraînement de sortie, dans lequel, dans une fonction de verrouillage de stationnement, deux vitesses sont enclenchées en même temps, à savoir une première vitesse et une deuxième vitesse,
dans lequel, suite à une demande d'activation de la fonction de verrouillage de stationnement (1), au moins dans une première plage de vitesse (10) du véhicule, un frein de véhicule est activé (11) pour mettre (3) le véhicule à l'arrêt, dans lequel, pendant le freinage du véhicule au moyen du frein de véhicule, la première vitesse est enclenchée (12), et à l'arrêt ou presque à l'arrêt du véhicule (3), la deuxième vitesse est enclenchée (7) de sorte que la fonction de verrouillage de stationnement est activée,
**caractérisé en ce qu'**après, pendant ou juste avant l'enclenchement de la première vitesse, le freinage par le frein de véhicule est renforcé.

2. Procédé selon la revendication 1, **caractérisé en ce que** la première vitesse est enclenchée (12) dès que le frein de véhicule est activé (11) pour mettre le véhicule l'arrêt.

3. Procédé selon au moins l'une des revendications précédentes, **caractérisé en ce que** la première plage de vitesse du véhicule (10) va jusqu'à environ 5 km/h et commence de préférence juste au-dessus de 0 km/h.

4. Procédé selon au moins l'une des revendications précédentes, **caractérisé en ce qu'**après enclenchement de la première vitesse et à l'arrêt ou presque à l'arrêt du véhicule (3), en particulier avant, pendant ou après que la deuxième vitesse est enclenchée (7), un frein à main du véhicule (4) est activé.

5. Procédé selon la revendication 4, **caractérisé en ce que** le frein à main reste activé pendant un arrêt du véhicule et n'est desserré (21) à nouveau que lors de la désactivation de la fonction de verrouillage de stationnement (15).

6. Procédé selon au moins l'une des revendications précédentes, **caractérisé en ce que** le cas échéant, des mesures servant à l'enclenchement de la deuxième vitesse afin de surmonter une position dent sur dent sont effectuées (6), en particulier la précontrainte d'une fourchette de sélection.

7. Procédé selon au moins l'une des revendications précédentes, **caractérisé en ce que** suite à une demande de désactivation de la fonction de verrouillage de stationnement (15), la deuxième vitesse enclenchée est désenclenchée (20), et ensuite, un frein à main est desserré (21) le cas échéant.

8. Procédé selon la revendication 7, **caractérisé en ce qu'**avant le désenclenchement de la deuxième vitesse enclenchée (20), la force de sélection nécessaire à cet effet est déterminée (17), et si la force de sélection nécessaire dépasse (23) une valeur limite, des mesures auxiliaires pour une libération plus facile de la deuxième vitesse (24, 25) sont effectuées.

9. Procédé selon la revendication 8, **caractérisé en ce que** les mesures auxiliaires (24, 25) comprennent l'application d'un couple (25) au moyen du premier ou du deuxième embrayage à friction.

10. Procédé selon au moins l'une des revendications précédentes, **caractérisé en ce que** la boîte de vitesses automatisée est une boîte de vitesses à double embrayage qui comprend une première transmission partielle pourvue d'un premier arbre d'entrée présentant un premier groupe de vitesses et étant relié côté entrée au premier embrayage à friction, une deuxième transmission partielle comprenant un deuxième arbre d'entrée présentant un deuxième groupe de vitesses et étant relié côté entrée à un deuxième embrayage à friction, et un entraînement de sortie commun, dans lequel, dans une fonction de verrouillage de stationnement, deux vitesses associées à l'une des deux transmissions partielles sont enclenchées en même temps, à savoir une première vitesse et une deuxième vitesse de la transmission partielle en question.

11. Véhicule, comprenant une boîte de vitesses automatisée, en particulier une boîte de vitesses à double embrayage, et un dispositif de commande, le dispositif de commande étant réalisé pour exécuter un procédé selon au moins l'une des revendications précédentes.
